# EUROPÄISCHE PATENTSCHRIFT

(11) **EP 1 447 307 B1**
(45) Veröffentlichungstag und Bekanntmachung des Hinweises auf die Patenterteilung: **25.10.2006**
(21) Anmeldenummer: 04000420.2
(22) Anmeldetag: 12.01.2004
(51) Int. Cl.: B62D 5/09

(54) **Verfahren zur Bemessung eines Lenkölstromes und hydraulische Lenkeinrichtung mit Stromverstärkung**
Method for determining a steering fluid flow and hydraulic steering arrangement with flow amplification
Procédé pour déterminer le débit de fluide de la direction et dispositif de direction hydraulique avec amplification de débit

(30) Priorität: 18.01.2003 DE 10301752
(43) Veröffentlichungstag der Anmeldung: 18.08.2004
(73) Patentinhaber: Bosch Rexroth AG, 70184 Stuttgart (DE)
(72) Erfinder: Bergmann, Erhard, Dr., 19079 Banzkow (DE); Voss, Gerhard, 19370 Parchim (DE); Posch, Markus, 19417 Klein Labenz (DE)
(74) Vertreter: Jaap, Reinhard

(56) Entgegenhaltungen:
- EP-A- 0 725 001
- DE-A- 1 755 297
- DE-A- 3 730 708
- DE-A- 4 133 726
- DE-U- 29 915 179

## Beschreibung

Die Erfindung betrifft ein Verfahren zur Bemessung eines Lenkölstromes und eine hydraulische Lenkeinrichtung mit Stromverstärkung nach den Oberbegriffen der Ansprüche 1 und 4.
Solche Verfahren und Lenkeinrichtungen werden insbesondere in langsamfahrenden Fahrzeugen mit hohen Achslasten eingesetzt.

Hydrostatische Lenkeinrichtungen bestehen in der Hauptsache aus einem Drehschiebersteuerventil und einer Dosierpumpe. Das Drehschiebersteuerventil wird aus einer äußeren, im Gehäuse eingepassten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad der Dosierpumpe verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und der Dosierpumpe besteht über Kommutatorbohrungen eine hydraulische Verbindung. Die hydraulische Lenkeinrichtung besitzt Anschlüsse für einen Zulauf, einem Rücklauf und für zwei Zylinderleitungen für den Lenkzylinder.

Diese Lenkeinrichtungen zeichnen sich durch ein hohes Verdrängungsvolumen aus, besitzen aber keine Übersetzungsänderung zwischen Servolenkbetrieb und Notlenkbetrieb. Das bedeutet aber, dass die Lenkeinrichtung bei einem möglichen Ausfall der Versorgungspumpe schlagartig auf Notlenkbetrieb umschaltet und damit die gesamte notwendige Lenkkraft manuell am Lenkrad aufgebracht werden muss. Das ist insbesondere im Straßenverkehr ein Sicherheitsrisiko.

Inzwischen gibt es Lenkeinrichtungen, die in der konkreten Situation des Wechselns von Servolenkbetrieb auf Notlenkbetrieb automatisch auf ein anderes Übersetzungsverhältnis umschalten.
Dazu gehören solche Lenkeinrichtungen, bei denen im Servolenkbetrieb alle Kammern der Dosierpumpe an der Ölbereitstellung für den Lenkzylinder beteiligt und im Notlenkbetrieb einige dieser Kammern abgeschaltet, also drucklos mit dem Tank verbunden sind. Eine solche Lenkeinrichtung mit Kammerabschaltung ist beispielsweise in der DE 22 28 531 C2 beschrieben. Diese Lenkeinrichtungen haben den Nachteil, dass ihr Übersetzungsverhältnis in Abhängigkeit von der Anzahl der abgeschalteten Kammern stufenweise erfolgt, was sich am Lenkverhalten negativ bemerkbar macht.

Bekannt sind aber auch Lenkeinrichtungen mit einer sogenannten Stromverstärkung, wie sie beispielsweise in der EP 0 725 001 B1 beschrieben ist.
Diese Lenkeinrichtung bildet mit allen ihren Steuerleitungen und mit allen Kammern der Dosierpumpe eine Hauptstromleitung zur Verbindung der Versorgungspumpe mit dem Lenkzylinder und zurück zum Tank. Zusätzlich besitzt diese Lenkeinrichtung eine Nebenstromleitung, welche die Dosierpumpe umgeht und dazu vor der Dosierpumpe von der Hauptstromleitung abzweigt und hinter der Dosierpumpe wieder in die Hauptstromleitung einmündet. In der Nebenstromleitung befindet sich ein Stromregelventil, dass hydraulisch vom Eingangsdruck der Lenkeinrichtung, also vom Druck vor der Dosierpumpe gesteuert wird. Damit stellt sich stets ein zum Hauptstrom proportionaler Nebenstrom ein.
Im Servolenkbetrieb fließt der von der Versorgungspumpe bereitgestellte Ölstrom sowohl über die Hauptstromleitung als auch über die druckabhängig geöffnete Nebenstromleitung zum Lenkzylinder. Dagegen ist die Nebenstromleitung im Notlenkbetrieb, also bei Ausfall der Versorgungspumpe, von der Ölstromversorgung abgeschnitten, weil die Eingangsleitung der Lenkeinrichtung wegen des Ausfalls der Versorgungspumpe drucklos geworden ist.
Diese Lenkeinrichtung mit Stromverstärkung ermöglicht ein stufenloses Übersetzungsverhältnis zwischen den Betriebsarten Servolenkbetrieb und Notlenkbetrieb in einer gewünschten Größenordnung. Allerdings ist es von Nachteil, dass diese Lenkeinrichtung eine konstante lineare Abhängigkeit des Lenkförderstromes zur Drehzahl des Lenkrades besitzt und die Größe dieser linearen Abhängigkeit nur auf einen bestimmten Anwendungsfall ausgelegt ist. Damit ist die Einsatzmöglichkeit der betreffenden Lenkeinrichtung nur auf einen speziellen Anwendungsfall eingeschränkt.
Eine Anpassung der betreffenden Lenkeinrichtung an einen anderen Anwendungsfall ist nur mit einem erheblichen Umrüstaufwand verbunden.

Der Erfindung liegt daher die Aufgabe zugrunde, ein gattungsgemäßes Verfahren zur Bemessung eines Lenkölstromes und eine entsprechende Lenkeinrichtung mit Stromverstärkung zu entwickeln, bei denen der verstärkte Lenkölstrom an unterschiedliche Anwendungsmöglichkeiten angepasst werden kann..
Diese Aufgabe wird durch die kennzeichnenden Merkmale des Anspruchs 1 gelöst. Zweckdienliche Ausgestaltungen der neuen technischen Lösung ergeben sich aus den Merkmalen der Ansprüche 2 bis 5 und 7 bis 11.
Mit der neuen Lenkeinrichtung mit Stromverstärkung werden die genannten Nachteile des Standes der Technik beseitigt.

Die Erfindung soll an Hand von mehreren Ausführungsbeispielen näher erläutert werden.
Dazu zeigen
- Fig. 1:: den Gegenstand der Erfindung in der Ausführungsform mit einem Drehwinkelsensor als Messwertgeber,
- Fig. 2:: den Gegenstand der Erfindung in der Ausführungsform mit einem Drucksensor als Messwertgeber,
- Fig. 3:: den Gegenstand der Erfindung in der Ausführungsform mit einem Drehwinkelsensor und einem Drucksensor als Messwertgeber und
- Fig. 4:: ein Diagramm über den Verlauf unterschiedlicher Kennlinien des verstärkten Lenkölstromes.

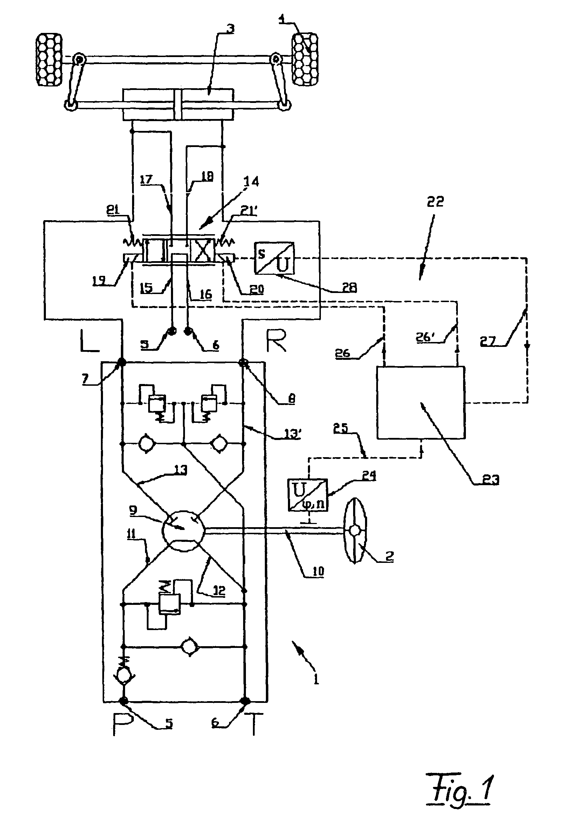

Der Lenkkreislauf ist aus Gründen der Übersichtlichkeit vereinfacht dargestellt und besteht gemäß der Fig. 1 bis 3 aus der Lenkeinrichtung 1 mit einem Handlenkrad 2 und aus einem Lenkzylinder 3 mit einem über ein Lenkgestänge angehängtes Räderpaar 4.
Die Lenkeinrichtung 1 besitzt einen Zulaufanschluss 5, der mit einer nichtdargestellten Versorgungspumpe verbunden ist, einen Rücklaufanschluss 6, der zu einem ebenfalls nicht gezeigten Öltank führt, und zwei Zylinderanschlüssen 7 und 8, die beide mit dem Lenkzylinder 3 verbunden sind und die jeweils für eine der beiden Lenkrichtungen zuständig sind.
Die Lenkeinrichtung 1 besteht im wesentlichen aus einer Dosierpumpe 9 und einem Lenkventil. Diese Dosierpumpe 9 ist mechanisch über eine Lenksäule 10 mit dem Handlenkrad 2 verbunden. Hydraulisch ist diese Dosierpumpe 9 einerseits über Zulaufleitungen 11 und den Zulaufanschluss 5 mit der Versorgungspumpe, über Rücklaufleitungen 12 und den Rücklaufanschluss 6 mit dem Öltank und andererseits über Zylinderleitungen 13, 13' und die Zylinderanschlüsse 7 und 8 mit dem Lenkzylinder 3 verbunden-Damit bildet sich vom Zulaufanschluss 5 zum Lenkzylinder 3 und zurück zum Rücklaufanschluss 6 eine Hauptleitung aus, indem der Hauptstrom der Lenkung fließt.
Aus der Hauptleitung zweigt vor der Dosierpumpe 9 eine Nebenleitung ab. In dieser Nebenleitung befindet sich ein Stromregelventil, welches zur Generierung des zusätzlichen Lenkölstromes verwendet wird. Das vorzugsweise verwendete Dreistellungs-Stromregelventil 14 ist mit über den Zulaufanschluss 5' und der Zulaufleitung 15 mit einer nichtdargestellten Versorgungspumpe verbunden und über den Rücklaufanschluss 6' mit der Rücklaufleitung 16 mit einem ebenfalls nicht gezeigten Öltank verbunden. Über die Zylinderleitung 17 bzw. 18 ist das Dreistellungs-Stromregelventil mit dem Lenkzylinder 3 verbunden. Damit bildet sich vom Zulaufanschluss 5' zum Lenkzylinder 3 und zurück zum Rücklaufanschluss 6' der Nebenstrom der Lenkung aus.
Dazu besitzt das Dreistellungs-Stromregelventil 14 eine geschlossene Mittelstellung und zwei gegenüberliegende Arbeitsstellungen, in denen ein geregelter Zulaufstrom und ein ungedrosselter Rücklauf ermöglicht wird. Das Dreistellungs-Stromregelventil 14 ist zu beiden Seiten mit je einer elektrischen Stelleinheit 19, 20 zur Verbindung der Zulaufleitungen 15 der Nebenleitung mit den für die gewünschte Lenkrichtung erforderlichen Zylinderleitungen 17 oder 18 ausgestattet. Weiterhin besitzt das Dreistellungs-Stromregelventil 14 zu beiden Seiten je eine Rückstellfeder 21, 21' zur Rückführung des Regelkolbens des Dreistellungs-Stromregelventils 14 in die gesperrte Mittelstellung, wenn die elektrischen Stelleinheiten 19, 20 ohne Steuersignal sind.

Das Dreistellungs-Stromregelventil 14 und damit die Nebenleitung der Lenkeinrichtung 1 steht nach dem Steer-by-Wire-Prinzip mit einem elektronischen Steuerkreis 22 in funktioneller Verbindung.
Dieser Steuerkreis 22 besteht in einer ersten Ausführungsform gemäß der Fig. 1 in der Hauptsache aus einem elektronischen Steuergerät 23 und einem Drehwinkelsensor 24, die beide über eine eingangsseitige Steuerleitung 25 miteinander verbunden sind. Der Drehwinkelsensor 24 ist an der Lenksäule 10 des Handlenkrades 2 angeordnet und ermittelt als Messgröße den eingeschlagenen Drehwinkel und die entsprechende Drehgeschwindigkeit des Handlenkrades 2. Das elektronische Steuergerät 23 ist weiterhin über zwei ausgangsseitige Steuerleitungen 26, 26' mit jeweils einer der elektrischen Stelleinheit 19, 20 des Dreistellungs-Stromregelventils 14 verbunden. Das elektronische Steuergerät 23 besitzt weiterhin eine eingangsseitige Steuerleitung 27, die das Steuergerät 23 mit einem am Dreistellungs-Stromregelventil 14 befindlichen Wegsensor 28 verbindet. Über diese eingangsseitige Steuerleitung 27 ist das Stromregelventil 14 mit dem Steuergerät 23 in der Art rückgekoppelt, dass die Stellung des Regelkolbens des Dreistellungs-Stromregelventils 14 als eingehende Messgröße für das elektronische Steuergerät 23 ermittelt wird.
Das Dreistellungs-Stromregelventil 14 ist konstruktiv oder schaltungstechnisch mit einer Rücklaufsperre ausgerüstet, die verhindert, dass der im Notlenkbetrieb geförderte Notlenkstrom über das in einer Arbeitsstellung befindliche Dreistellungs-Stromregelventil 14 wieder in den Tank zurückläuft.

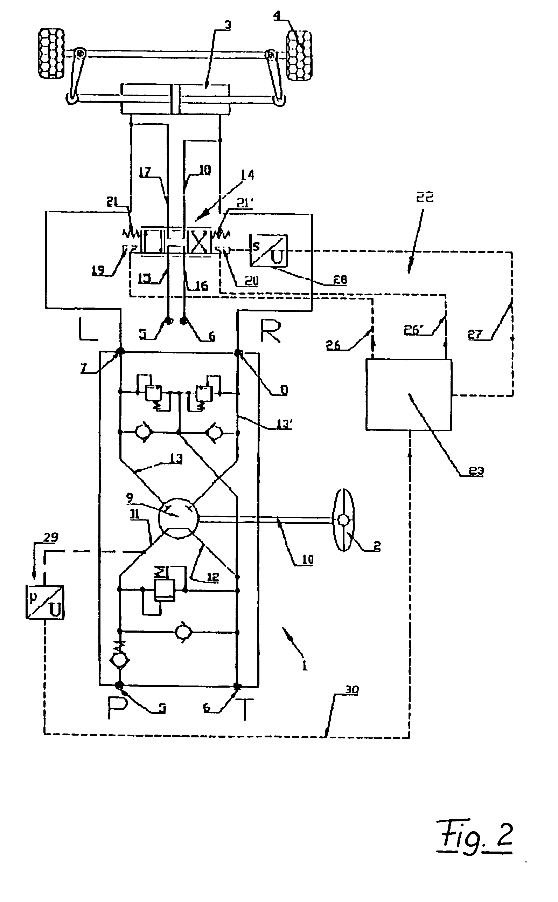

In einer zweiten Ausführungsform gemäß der Fig. 2 ist die Lenkeinrichtung 1 an Stelle des Drehwinkelsensors 24 mit einem Drucksensor 29 ausgestattet, der über eine eingangsseitige Steuerleitung 30 mit dem elektronischen Steuergerät 23 verbunden ist. Dieser Drucksensor 29 befindet sich auf der Eingansseite der Lenkeinrichtung 1 und ermittelt den Eingansdruck der Lenkeinrichtung 1 vor der Dosierpumpe 9 als Messgröße für das Steuergerät 23.

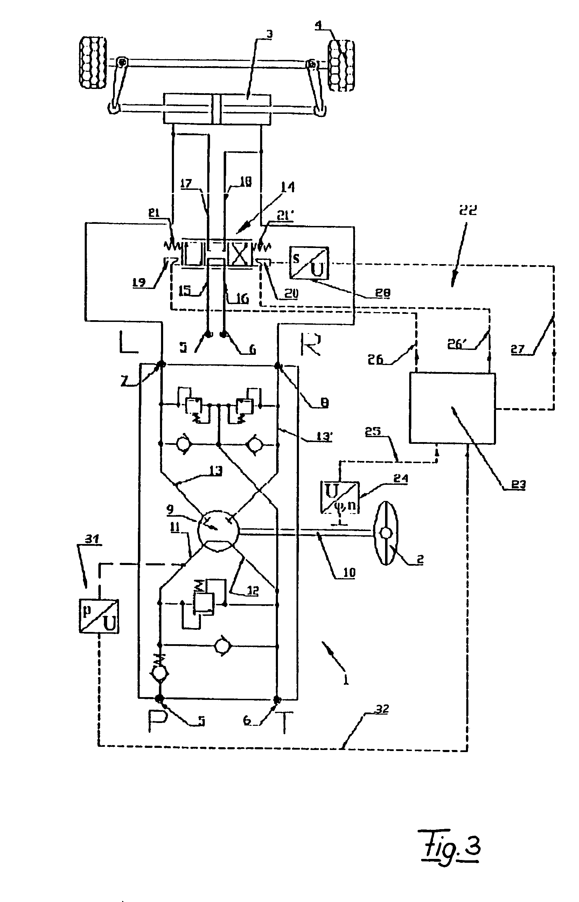

In einer dritten Ausführungsform gemäß der Fig. 3 besitzt die Lenkeinrichtung 1 sowohl einen Drehwinkelsensor 24 und eine eingangsseitige Steuerleitung 25, sowie es auch die erste Ausführungsform nach der Fig. 1 zeigt, als auch einen Drucksensor 31, der über eine eingangsseitige Steuerleitung 32 mit dem elektronischen Steuergerät 23 verbunden ist. Dieser Drucksensor 31 befindet sich auf der Eingansseite der Lenkeinrichtung 1 und ermittelt den Eingansdruck der Lenkeinrichtung 1 im Notbetrieb als Messgröße für das Steuergerät 23.

Die neue Lenkeinrichtung mit Stromverstärkung hat folgende Funktion.
In der nichtbetätigten Neutralstellung ist das Lenkventil der Lenkeinrichtung 1 geschlossen und das von der Versorgungspumpe gelieferte Öl wird über Zulaufleitungen 11, dem Lenkventil der Lenkeinrichtung und den Rücklaufleitungen 12 drucklos in den Tank zurückgeleitet. Das Dreistellungs-Stromregelventil 14 befindet sich durch die Kräfte der Rückstellfedern 21,21' ebenfalls in der geschlossenen Mittelstellung, weil die elektrischen Stelleinheiten 19, 20 kein elektrisches Steuersignal haben.
Durch Betätigung des Handlenkrades 2 kommt es innerhalb des Lenkventils der Lenkeinrichtung 1 zur Auslenkung des Steuerkolbens gegenüber der Steuerhülse und damit zum Öffnen entsprechender verstellbarer Drosseln. Damit beginnt der Servolenkbetrieb, in dem das von der Versorgungspumpe gelieferte Öl in der Hauptstromleitung zur Dosierpumpe 9 gelangt. Hier wird es dosiert und in dieser abgemessenen Menge über die Zylinderleitungen 13, 13' dem Lenkzylinder 3 zur Verfügung gestellt.
Gleichzeitig nimmt der Drehwinkelsensor 24 nach dem Steer-by-Wire-Prinzip den Lenkausschlag und die Geschwindigkeit der Lenkbetätigung am Handlenkrad 2 auf und gibt ein entsprechendes Messsignal auf das elektronische Steuergerät 23. Nach der Größe dieses Messsignals produziert das Steuergerät 23 ein entsprechendes elektrisches Steuersignal und gibt dieses Steuersignal auf eine der beiden Steuereinheiten 19, 20 des Dreistellungs-Stromregelventils 14. Darauf schaltet das Dreistellungs-Stromregelventil 14 auf eine der beiden Arbeitsstellungen, wobei der Regelkolben des Dreistellungs-Stromregelventils 14 entgegen den Kräften der Rückstellfedern 21, 21' eine Regelstellung einnimmt, die einen definierten Öffnungsquerschnitt und damit einen vorbestimmten Nebenölstrom über die in der Nebenleitung befindlichen Zylinderleitung 17 bzw. 18 freigibt.
Die Menge des Hauptstroms und des Steer-by-Wire-Nebenstroms ergeben den verstärkten Lenkölstrom, der linear abhängig von der Drehzahl der Lenkbetätigung am Handlenkrad 2 ist. Danach bestimmt sich die Größe des Ausschlags des Räderpaares 4.
Die Arbeitsweise des Dreistellungs-Stromregelventils 14 wird nun dadurch überwacht, dass der Wegsensor 28 jede Stellung des Regelkolbens des Dreistellungs-Stromregelventils 14 ermittelt und als eine Messgröße an das Steuergerät 23 übermittelt. Hier wird die Istmessgröße des Dreistellungs-Stromregelventils 14 mit der Sollmessgröße des Steuergeräts 23 verglichen und bei Abweichung ein entsprechendes Steuersignal auf das Dreistellungs-Stromregelventil 14 gegeben, wodurch das Dreistellungs-Stromregelventil 14 entweder abgeschalten oder nachgeregelt wird.

Bei einem Ausfall der elektronischen Bauteile fehlt es an den erforderlichen elektrischen Steuersignalen für die elektrischen Stelleinheiten 19, 20 des Dreistellungs-Stromregelventils 14 und der Regelkolben des Dreistellungs-Stromregelventils 14 nimmt durch die Kräfte der beiden Rückstellfedern 21,21' seine geschlossene Mittelstellung ein. Damit ist der Steer-by-Wire-Nebenstrom unterbrochen und allein der Hauptstrom der Lenkeinrichtung 1 versorgt den Lenkzylinder 3. Damit fällt die kombinierte hydraulisch-elektrische Funktion der Lenkeinrichtung auf die hydraulische Ebene zurück, wobei der Servolenkbetrieb mit einem verminderten Lenkvolumen fortgeführt wird, was sich lediglich durch eine Erhöhung der erforderlichen Lenkraddrehzahl bemerkbar macht.

Bei einem zusätzlichen Ausfall der Versorgungspumpe wird die Zulaufleitung 11 der Lenkeinrichtung drucklos und es stellt sich automatisch der Notlenkbetrieb ein. Dabei wird der erforderliche Lenkölstrom allein durch die von der Handkraft angetriebenen Dosierpumpe 9 angesaugt und dem Lenkzylinder 3 je Umdrehung mit einem verminderten Lenkvolumen zur Verfügung gestellt. Dabei verhindert die geschlossene Mittelstellung des Dreistellungs-Stromregelventil 14 eine drucklose Rückführung des Notlenkölstromes über das Dreistellungs-Stromregelventils 14 in den Tank.

Bleibt die Elektronik für den Steer-by-Wire-Zusatzstrom in Betrieb und es fällt nur die Versorgungspumpe aus, dann arbeitet die alternative Ausführungsform nach der Fig. 1 wie folgt. Während der Notlenkstrom von der Dosierpumpe 9 zum Lenkzylinder 3 gefördert wird, befindet sich das Dreistellungs-Stromregelventil 14 auf Grund der Betriebsbereitschaft der Elektronik in eine seiner Offenstellungen. Dabei wird ein Zurückströmen des Notlenkstromes über das geöffnete Dreistellungs-Stromregelventil 14 in den Tank durch die Rücklaufsperre des Dreistellungs-Stromregelventils 14 verhindert.

Bleibt die Elektronik für den Steer-by-Wire-Nebenstrom in Betrieb und es fällt nur die Versorgungspumpe aus, dann arbeitet die alternative Ausführungsform nach der Fig. 2 wie folgt. Während der Notlenkstrom von der Dosierpumpe 9 zum Lenkzylinder 3 gefördert wird, erfasst der Drucksensor 29 den quasi nicht vorhandenen Druck in der Zulaufleitung 11 vor der Dosierpumpe 9 und gibt diesen Messwert als Messsignal an das elektronische Steuergerät 23. Dieses Eingangssignal verarbeitet das Steuergerät 23 zu einem Steuersignal, das die beiden ausgehenden Steuerleitungen 26, 26' unterbricht, sodass das Dreistellungs-Stromregelventil 14 durch die Kräfte der Rückstellfedern 21,21' seine geschlossene Mittelstellung einnimmt. Dadurch wird das Zurückströmen des Notlenkstromes über das Zweistellungs-Stromregelventil 14 in den Tank auch ohne eine gesonderte Rücklaufsperre verhindert.

Diese Lenkeinrichtung mit Stromverstärkung kann bedarfsgerechte Lenkölstrom-Drehzahl-Kennlinien erzielen.
Mit Hilfe einer elektronischen Bedienbox kann das Steuergerät 23 in entsprechender Weise programmiert werden. So können dem eingebenden Messsignal über die Größe der ermittelten Drehzahl am Handlenkrad 2 besondere Ausgangssignale des Steuergerätes 23 zugeordnet werden, sodass das Dreistellungs-Stromregelventil 14 zu jeder Drehzahl am Handlenkrad 2 eine zugeordnete Offenstellung einnimmt und damit einen Nebenölstrom in gewünschter Größe realisiert.

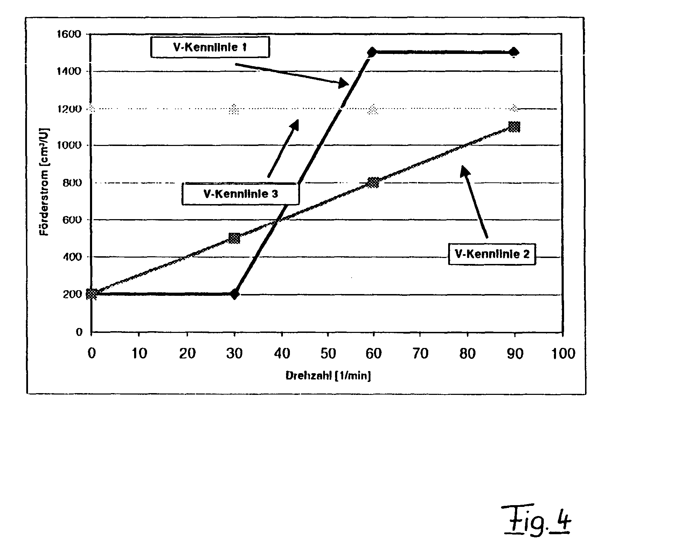

In der Fig. 4 sind beispielhafte Kennlinienverläufe von verstärkten Lenkölströmen dargestellt.
So hat zeigt die Kennlinie 1 beispielsweise, dass der Lenkölstrom der Lenkeinrichtung 1 von der geschlossenen Neutralstellung der Lenkeinrichtung 1 bis zu einer Drehzahl am Handlenkrad 2 von 30 U/min unverändert bei 200 cm³/U verbleibt. Zwischen einer Drehzahl von 30 U/min bis 60 U/min steigt dieser Lenkölstrom auf 1500 cm³/U an. Dieser Lenkölstrom bleibt konstant, wenn auch die Drehzahl weiter auf 90 U/min erhöht wird.

Es sind natürlich ohne Einschränkung weitere Kennlinienverläufe möglich. Alle diese Kennlinienverläufe können im Steuergerät 23 programmiert und gespeichert werden, sodass mit Hilfe eines hier nicht gezeigten Kennlinienschalters jederzeit die für einen speziellen Anwendungsfall gewünschte Kennlinie eingelegt werden kann. Neue Kennlinien können theoretisch vorgegeben oder nach einem persönlichen Empfinden empirisch ermittelt werden.

### Bezugszeichen

- 1: Lenkeinrichtung
- 2: Handlenkrad
- 3: Lenkzylinder
- 4: Räderpaar
- 5: Zulaufanschluss der Hauptleitung
- 5': Zulaufanschluss der Nebenleitung
- 6: Rücklaufanschluss der Hauptleitung
- 6': Rücklaufanschluss der Nebenleitung
- 7: Zylinderanschluss der Hauptleitung
- 8: Zylinderanschluss der Hauptleitung
- 9: Dosierpumpe
- 10: Lenksäule
- 11: Zulaufleitung
- 12: Rücklaufleitung
- 13, 13': Zylinderleitung
- 14: Dreistellungs-Stromregelventil
- 15: Zulaufleitung der Nebenleitung
- 16: Rücklaufleitung der Nebenleitung
- 17: Zylinderleitung der Nebenleitung
- 18: Zylinderleitung der Nebenleitung
- 19: elektrische Stelleinheit
- 20: elektrische Stelleinheit
- 21,21': Rückstellfeder
- 22: Steuerkreis
- 23: Steuergerät
- 24: Drehwinkelsensor
- 25: eingangsseitige Steuerleitung
- 26, 26': ausgangsseitige Steuerleitung
- 27: eingangsseitige Steuerleitung
- 28: Wegsensor
- 29: Drucksensor
- 30: eingangsseitige Steuerleitung
- 31: Drucksensor
- 32: eingangsseitige Steuerleitung

## Patentansprüche

1. Verfahren zur Bemessung eines Lenkölstromes nach dem Prinzip der Stromverstärkung, bei dem ein von einer Versorgungspumpe bereitgestellter Versorgungsölstrom von einer Dosierpumpe (9) bemessen und in dosierter Menge einem Lenkzylinder bereitgestellt wird und diesem dosierten Lenkölstrom ein geregelter und die Dosierpumpe umgehender Nebenstrom beigegeben wird,
**dadurch gekennzeichnet, dass** die Regelung des Nebenstroms nach dem Steer-by-Wire-Prinzip erfolgt, in dem ein zum Hauptstrom der Lenkeinrichtung (1) proportional abhängiges Messsignal zu einem elektrischen Steuersignal für ein in der Nebenstromleitung befindliches Stromregelventil umgewandelt wird, wobei den ermittelten Messgrößen ausgewählte Steuergrößen zugeordnet werden und bei Ausfall des elektronischen Steuerkreises (22) der Nebenstrom abgesperrt wird.

2. Verfahren nach Anspruch 1,
**dadurch gekennzeichnet, dass** das proportional abhängige Messsignal der Verstelldrehwinkel und/oder die Drehgeschwindigkeit des Handlenkrades (2) ist.

3. Verfahren nach Anspruch 1,
**dadurch gekennzeichnet, dass** das proportional abhängige Messsignal der hydraulische Druck in der Hauptstromleitung der Lenkeinrichtung (1) ist.

4. Verfahren nach den Ansprüchen 2 oder 3,
**dadurch gekennzeichnet, dass** der unter einem Sollwert liegende Eingangsdruck der Lenkeinrichtung (1) vor der Dosierpumpe (9) zu einem Steuersignal für die Abschaltung der Steuersignale für das Stromregelventil oder für die Verstellung in die geschlossene Mittelstellung des Stromregelventils umgewandelt wird.

5. Verfahren nach Anspruch 4,
**dadurch gekennzeichnet, dass** die Stellung des Regelorgans des Stromregelventils zu einem rückkoppelnden Steuersignal für die Abschaltung oder Nachregulierung des Steuersignals für das Stromregelventil umgewandelt wird.

6. Hydraulische Lenkeinrichtung mit Stromverstärkung, bestehend im wesentlichen aus einem Lenkventil und einer Dosierpumpe (9), wobei das Lenkventil miteinander und mit der Dosierpumpe (9) korrespondierende Leitungen besitzt, die zwischen einer Zulaufleitung (11) und einem Lenkzylinder (3) eine Hauptstromleitung und eine die Dosierpumpe (9) umgehende Nebenstromleitung ausbilden, wobei sich in der Nebenölstromleitung ein vom Hauptölstrom gesteuertes Stromregelventil befindet,
**dadurch gekennzeichnet, dass** die Lenkeinrichtung (1) und das in der Nebenölstromleitung befindliche Stromregelventil über einen elektrischen Steuerkreis (22) miteinander verbunden sind, wobei
- der Steuerkreis (22) aus einem sensorischen Messwertaufnehmer zur Erfassung eines zum Hauptstrom proportional abhängigen Messsignals, aus einem Steuergerät (23) zur Umwandlung des vom Messwertaufnehmer ausgehenden Messsignals in ein Steuersignal für das Stromregelventil und aus mindestens einer elektrischen Stelleinheit (19, 20) zur Verwertung des vom Steuergerät (23) ausgehenden Steuersignals in eine Verstellung des Regelorgans des Stromregelventils in eine seiner Arbeitsstellungen besteht,
- das Steuergerät (23) Programmiereinrichtungen zur Zuordnung von beliebigen Steuergrößen zu den ermittelten Messgrößen besitzt und
- das Stromregelventil eine gesperrte Mittelstellung besitzt.

7. Hydraulische Lenkeinrichtung nach Anspruch 6,
**dadurch gekennzeichnet, dass** der Messwertaufnehmer ein Drehwinkelsensor (24) ist, der an der Lenksäule (10) oder am Handlenkrad (2) befestigt ist.

8. Hydraulische Lenkeinrichtung nach Anspruch 6,
**dadurch gekennzeichnet, dass** der Messwertaufnehmer ein Drucksensor (29) ist, der auf den Überdruck in der Hauptstromleitung der Lenkeinrichtung (1) abgestellt ist.

9. Hydraulische Lenkeinrichtung nach den Anspruch 7 oder 8,
**dadurch gekennzeichnet, dass** das Stromregelventil in jeder seiner Arbeitsstellungen mit einer konstruktiv oder anlagentechnisch ausgelegten Rücklaufsperre ausgerüstet ist.

10. Hydraulische Lenkeinrichtung nach dem Anspruch 9,
**dadurch gekennzeichnet, dass** zusätzlich zum Drehwinkelsensor (24) oder zum Drucksensor (29) ein weiterer Drucksensor (31) vorgesehen ist, der auf den Unterdruck im Hauptstrom vor der Dosierpumpe (9) abgestellt ist und dessen Messsignal zur Verstellung des Regelorgans des Stromregelventils in seine geschlossene Mittelstellung verwendet wird.

## Claims

1. Method for measuring a flow of steering fluid on the principle of flow reinforcement, in which a supply fluid flow provided by a supply pump is measured by a metering pump (9) and provided for a steering cylinder in a metered amount and a regulated subsidiary flow, avoiding the metering pump, is added to this metered flow of steering fluid,
**characterised in that** regulating the subsidiary flow is done on the steer-by-wire principle, in which a measuring signal proportionally dependent on the main flow of the steering device (1) is converted into an electric control signal for a flow-regulating valve located in the subsidiary flow line, selected control variables being assigned to the detected measuring variables and the subsidiary flow being shut off if the electronic control circuit (22) fails.

2. Method according to claim 1,
**characterised in that** the proportionally dependent measuring signal is the adjusting angle of rotation and/or the rotational speed of the steering handwheel (2).

3. Method according to claim 1,
**characterised in that** the proportionally dependent measuring signal is the hydraulic pressure in the main flow line of the steering device (1).

4. Method according to claims 2 or 3,
**characterised in that** the input pressure of the steering device (1), lying below a desired value, is converted before the metering pump (9) into a control signal for switching off the control signals for the flow-regulating valve or for adjusting into the closed central position of the flow-regulating valve.

5. Method according to claim 4,
**characterised in that** the position of the regulating element of the flow-regulating valve is converted into a feedback control signal for switching off or re-adjusting the control signal for the flow-regulating valve.

6. Hydraulic steering device with flow reinforcement, consisting substantially of a steering valve and a metering pump (9), the steering valve having lines corresponding with one another and with the metering pump (9) and forming a main flow line and a subsidiary flow line avoiding the metering pump (9) between an inlet line (11) and a steering cylinder (3), a flow-regulating valve controlled by the main fluid flow being located in the subsidiary fluid flow line,
**characterised in that** the steering device (1) and the flow-regulating valve located in the subsidiary fluid flow line are connected to one another via an electric control circuit (22), wherein
- the control circuit (22) consists of a sensory measuring value transducer for detecting a measuring signal proportionally dependent on the main flow, of a control device (23) for converting the measuring signal issuing from the measuring value transducer into a control signal for the flow-regulating valve and of at least one electric adjusting unit (19, 20) for processing the control signal issuing from the control device (23) into an adjustment of the regulating element of the flow-regulating valve into one of its operating positions,
- the control device (23) has programming devices for assigning any number of control variables to the detected measuring variables and
- the flow-regulating valve has a locked central position.

7. Hydraulic steering device according to claim 6,
**characterised in that** the measuring value transducer is an angle of rotation sensor (24) fastened to the steering column (10) or to the steering handwheel (2).

8. Hydraulic steering device according to claim 6,
**characterised in that** the measuring value transducer is a pressure sensor (29), which is geared to the excess pressure in the main flow line of the steering device (1).

9. Hydraulic steering device according to claim 7 or 8,
**characterised in that** the flow-regulating valve is equipped in each of its operating positions with a non-return lock configured structurally or in terms of the plant engineering.

10. Hydraulic steering device according to claim 9,
**characterised in that** in addition to the angle of rotation sensor (24) or to the pressure sensor (29) a further pressure sensor (31) is provided, which is geared to the vacuum in the main flow before the metering pump (9) and the measuring signal of which is used to adjust the regulating element of the flow-regulating valve into its closed central position.

## Revendications

1. Procédé pour déterminer un débit de fluide de direction selon le principe de l'amplification de débit, dans lequel un flux d'alimentation de fluide mis à disposition par une pompe d'alimentation est mesuré par une pompe de dosage (9) et mis à disposition en quantités dosées à un vérin de direction, et à ce flux de fluide de direction dosé est adjoint un flux annexe régulé et qui contourne la pompe de dosage,
**caractérisé en ce que**
la régulation du flux annexe a lieu selon le principe Steer by Wire dans lequel un signal de mesure variant proportionnellement au flux principal du dispositif de direction (1) est converti en un signal de commande électrique pour une soupape de régulation de débit dans la conduite de flux annexe, et des grandeurs de commande sélectionnées sont associées aux grandeurs de mesure déterminées, et en cas de défaillance du circuit de commande électronique (22) le flux annexe est fermé.

2. Procédé selon la revendication 1,
**caractérisé en ce que**
le signal de mesure à variation proportionnelle est l'angle de rotation de réglage et/ou la vitesse de rotation du volant de direction (2).

3. Procédé selon la revendication 1,
**caractérisé en ce que**
le signal de mesure à variation proportionnelle est la pression hydraulique dans la conduite de flux principal du dispositif de direction (1).

4. Procédé selon la revendication 2 ou 3,
**caractérisé en ce que**
la pression d'entrée du dispositif de direction (1) située en dessous d'une valeur théorique en amont de la pompe de dosage (9) est convertie en un signal de commande pour la désactivation des signaux de commande pour la soupape de régulation de débit ou pour le réglage en position médiane fermée de la soupape de régulation de débit.

5. Procédé selon la revendication 4,
**caractérisé en ce que**
la position de l'organe de régulation de la soupape de régulation de débit est convertie en un signal de commande à retour rétroactif pour la désactivation ou le réajustement du signal de commande de la soupape de régulation de débit.

6. Dispositif de direction hydraulique à amplification de débit, composé essentiellement d'une soupape de direction et d'une pompe de dosage (9), la soupape de direction ayant conjointement avec la pompe de dosage (9) des conduites correspondantes qui forment entre une conduite d'entrée (11) et un vérin de direction (3) une conduite de flux principal et une conduite de flux annexe contournant la pompe de dosage (9), avec une soupape de régulation de débit commandée par le flux de fluide principal et située dans la conduite de flux de fluide annexe,
**caractérisé en ce que**
le dispositif de direction (1) et la soupape de régulation de débit dans la conduite de flux de fluide annexe sont reliés l'un à l'autre par un circuit de commande électrique (22), et
- le circuit de commande (22) est composé d'un capteur de mesure sensoriel détectant un signal de mesure variant proportionnellement au flux principal, d'un appareil de commande (23) destiné à convertir le signal de mesure provenant du capteur de mesure en un signal de commande pour la soupape de régulation de débit et d'au moins une unité de réglage électrique (19, 20) utilisant le signal de commande provenant de l'appareil de commande (23) en un réglage de l'organe de régulation de la soupape de régulation de débit sur l'une de ses positions de fonctionnement,
- l'appareil de commande (23) possède des dispositifs de programmation destinés à associer des grandeurs de commande quelconques aux grandeurs de mesure déterminées, et
- la soupape de régulation de débit possède une position médiane fermée.

7. Dispositif de direction hydraulique selon la revendication 6,
**caractérisé en ce que**
le capteur de mesure est un capteur d'angle de rotation (24) fixé sur la colonne de direction (10) ou sur le volant de direction (2).

8. Dispositif de direction hydraulique selon la revendication 6,
**caractérisé en ce que**
le capteur de mesure est un capteur de pression (29) désactivé en cas de surpression dans la conduite de flux principal du dispositif de direction (1).

9. Dispositif de direction hydraulique selon la revendication 7 ou 8,
**caractérisé en ce que**
la soupape de régulation de débit est équipée d'un blocage anti-retour de construction ou d'installation, dans chacune de ses positions de fonctionnement.

10. Dispositif de direction hydraulique selon la revendication 9,
**caractérisé en ce qu'**
en plus du capteur d'angle de rotation (24) ou du capteur de pression (29), un autre capteur de pression (31) est prévu désactivé en cas de dépression dans le flux principal en amont de la pompe de dosage (9), et dont le signal de mesure est utilisé pour régler l'organe de régulation de la soupape de régulation de débit dans sa position médiane fermée.
